# EUROPEAN PATENT APPLICATION

(11) **EP 4 682 065 A1**
(43) Date of publication of application: **21.01.2026**
(21) Application number: 25187530.8
(22) Date of filing: 04.07.2025
(51) Int. Cl.: B65B 35/04, B65B 57/14, B65B 65/00, B25J 9/00, B65B 35/18, B65B 35/38, B65B 35/44, B65B 35/54, B65B 5/06

(54) **SYSTEM AND METHOD FOR BOXING PRODUCTS**

(30) Priority: 17.07.2024 IT 202400016543
(71) Applicant: Fameccanica.Data S.p.A., 66020 San Giovanni Teatino (CH) (IT)
(72) Inventor: GALANTE, Dario, 66020 San Giovanni Teatino (Chieti) (IT); FAIETA, Fabrizio, 66020 San Giovanni Teatino (Chieti) (IT)
(74) Representative: Buzzi, Notaro & Antonielli d'Oulx S.p.A.

(57) **Abstract**

A system (10) for boxing products (P), comprising at least one manipulator (84) configured to pick up products (P) from a buffer (24) and to deposit the products (P) on a feeding conveyor (20) in respective empty spaces (ES) based on information about the position of empty spaces (ES) provided by a detection device (22).

## Description

### Field of the Invention

The present invention relates to a system and a method for boxing products.

The invention has been developed with a view to its application in the sector of the production of absorbent sanitary articles, for boxing packs of absorbent sanitary articles enclosed in bags coming from a production line.

However, the invention is not limited to this specific sector and can be used in all cases where it is necessary to box products at the end of a production line.

### Prior Art

Systems for boxing products at the end of a production line represent a crucial element in industrial automation. These systems, often equipped with advanced robotic technology, are designed to ensure efficiency and precision in product packaging. Using automatic handling units equipped with anthropomorphic robots or similar, these systems can handle a wide range of product sizes and types, adapting to the specific needs of each customer. Customization is a fundamental aspect, allowing the systems to be configured to handle variable production volumes and to respond optimally to market dynamics. The efficiency of these systems translates into a significant improvement in productivity and the ability to respond quickly to changes in production needs.

In these systems, robotic boxing machines are used, conceived and realized to allow the vertical filling of boxes with previously formed groups of products, in which the products within the groups are arranged with a predetermined orientation determined in order to optimally exploit the volume of the boxes.

A boxing machine may include: a product group conveyor, a first robotic unit for forming groups of products on the product group conveyor, and a second robotic unit for picking up groups of products from the product group conveyor and for inserting the groups of products into respective boxes. An example of a robotic boxing machine is described in EP2096035A1.

Typically, a boxing machine is associated with a feeding conveyor configured to feed a row of products aligned with each other in the direction of transport to the boxing machine. In the row, the products are arranged with constant relative distances, so as to form at the entrance of the boxing machine a flow of products with a regular cadence.

In certain cases, systems for feeding boxing machines may include buffers for the accumulation of products. Buffers serve to accumulate products coming from the production line in case of a temporary stop of the boxing machine. The products deposited in the buffer are transferred to the main feeding conveyor when the production line stops.

In certain cases, empty spaces may be created in the row of products fed to the boxing machine, for example due to the fall of products during advancement on the feeding conveyor, the ejection of products from the row following a negative quality control, or the picking of products from the feeding conveyor for sending the products to a quality control.

When there are empty spaces in the row of products fed to the boxing machine, the robotic unit that forms the groups of products inside the boxing machine must wait for the arrival of a subsequent product, and this reduces the efficiency of the boxing machine.

### Object and Summary of the Invention

The object of the present invention is to provide a system and a method for boxing products that overcome the problems of the known technique.

In particular, the object of the present invention is to avoid the efficiency losses of the boxing system due to the presence of empty spaces in the row of products fed to the boxing machine.

According to the present invention, this object is achieved by a system for boxing products having the features forming the subject of claim 1.

According to another aspect, the invention relates to a method for boxing products having the features forming the subject of claim 7.

### Brief Description of the Drawings

The present invention will now be described in detail with reference to the attached drawings, given by way of non-limiting example, in which:
- Figure 1 is a schematic plan view of an embodiment of a system for boxing products according to the present invention,
- Figure 2 is a schematic perspective view of a manipulator indicated by arrow II in Figure 1, and
- Figures 3 and 4 are schematic plan views of possible embodiments of a system for boxing products according to the present invention.

### Detailed Description

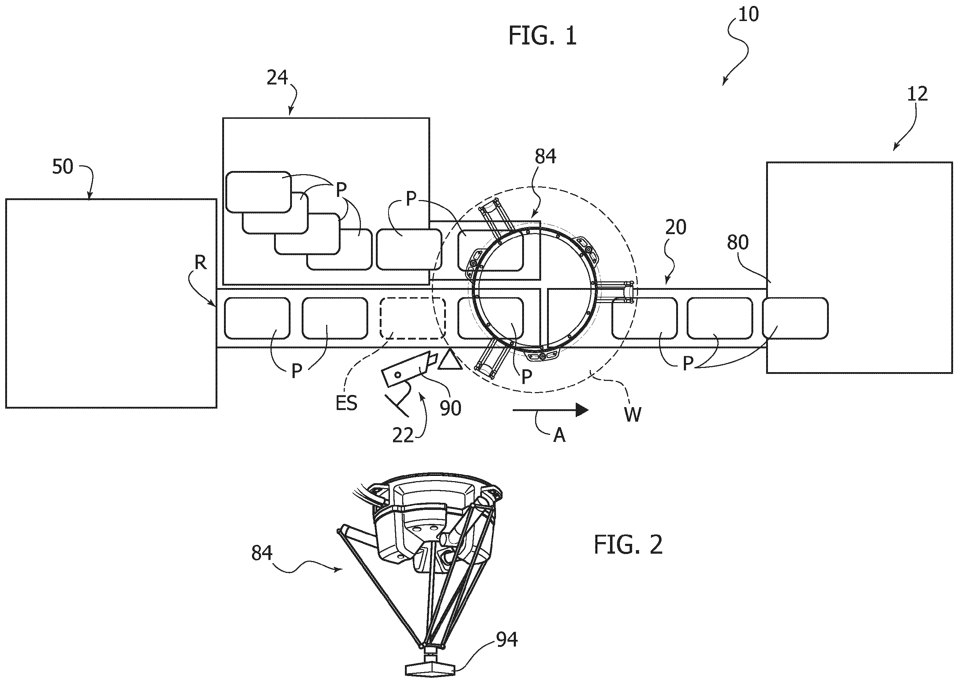

Referring to Figure 1, 10 indicates a system for boxing products P coming from a production line 50. The products P may be, for example, packs of absorbent sanitary articles enclosed in flexible bags.

The system 10 includes a boxing machine 12 configured to form groups of products and to insert such groups of products into respective boxes.

The boxing machine 12 may include a product group conveyor, a first robotic unit configured to form groups of products on the product group conveyor, and a second robotic unit configured to pick up groups of products from the product group conveyor and insert the groups of products into respective boxes.

The system 10 includes a feeding conveyor 20 that transfers the products P from the exit of the production line 50 to the entry section 80 of the boxing machine 12. On the feeding conveyor 20, the products P are aligned with each other in a transport direction A and form a row of products R in which the products P are spaced apart in the transport direction A by a substantially constant distance.

The system 10 includes a detection device 22 configured to detect the presence and position of empty spaces ES that interrupt the continuity of the row of products R. The empty spaces ES can be formed by the absence of one or more products in positions of the row of products R where the products P should be present. The empty spaces ES in the row of products R can be generated by the fall of products P during transport, the ejection of products P from the row of products R following a negative quality control, or the picking of products P from the row of products R for sending products P to a quality control.

The system 10 includes at least one manipulator 84 configured to pick up products P from the buffer 24 and to deposit the products P on the feeding conveyor 20 in respective empty spaces ES based on information about the position of empty spaces ES provided by the detection device 22. In this way, the manipulator 84 restores the continuity of the row of products R fed to the boxing machine 12.

Referring to Figure 2, the manipulator 84 includes a gripping element 94 configured to pick up a product P from the buffer 24 each time, for example by suction. The gripping element 94 of the manipulator 84 is movable in a working area W that covers an exit section of the buffer 24 and a stretch of the feeding conveyor 20.

In possible embodiments, the detection device 22 can be an optical detection device including at least one camera 90 configured to visually inspect the moving row of products R on the feeding conveyor 20. At least one camera 90 can be positioned stationary to visually inspect the row of products R upstream of the working area W of the manipulator 84, to detect the presence and position of empty spaces ES before they reach the working area W.

In possible embodiments, at least one camera 90 can be located on board the manipulator 84, for example on the gripping element 94. A camera 90 located on board the manipulator 84 can be constantly oriented to visually inspect the row of products R upstream of the working area W of the manipulator 84.

In possible embodiments, the detection device 22 may include at least one load cell configured to detect the presence and position of empty spaces ES on the feeding conveyor 20.

In accordance with further possible embodiments, the detection device 22 may include an ultrasonic sensor.

In possible embodiments, the detection device 22 may include a laser sensor.

The manipulator 84 is controlled based on information about the position of the empty spaces ES provided by the detection device 22 and is configured to deposit the products picked up from the buffer 24 into the empty spaces ES with the same orientation as the products P already placed on the feeding conveyor 20, so that the row of products R downstream of the working area W is continuous and free of empty spaces ES. This way, slowdowns in the production speed of the boxing machine 12 are avoided in case of empty spaces ES in the row of products **R.**

In operation, the manipulator 84 can pick up a product P from the buffer 24 and hold the product P in a waiting position above the advancing row of products R on the feeding conveyor 20 in direction A.

When the detection device 22 detects the presence of an empty space ES in the row of products R, the manipulator 84 deposits the waiting product P into the empty space ES as the empty space ES passes through the working area W of the manipulator 84.

During the depositing phase of the product P, the manipulator 84 can follow the empty space ES at the same speed as the feeding conveyor 20, so as to deposit the product P into the respective empty space ES without any speed difference between the product P and the feeding conveyor 20.

When the detection device 22 detects the presence of multiple closely spaced empty spaces ES in the row of products R, the manipulator 84 performs multiple cycles of picking and depositing while the empty spaces ES pass through the working area W of the manipulator 84.

In possible embodiments, the system could include a plurality of manipulators 84 with respective working areas W arranged in series along the feeding conveyor 20.

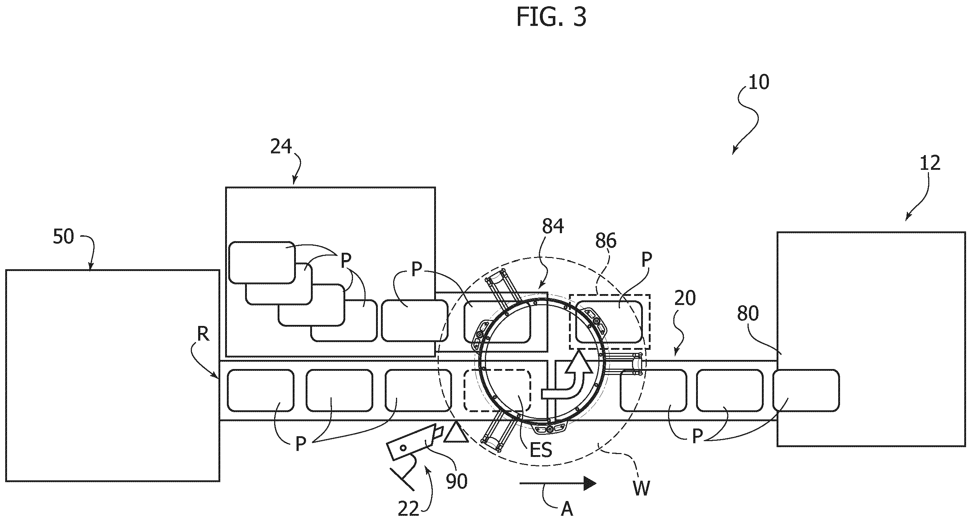

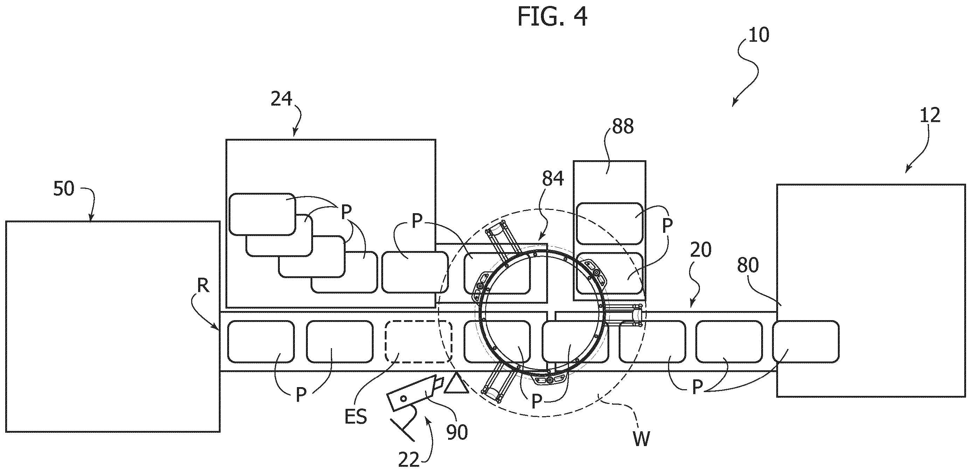

Figures 3 and 4 illustrate a second and a third embodiment of a system according to the present invention. The elements corresponding to those previously described are indicated with the same reference numbers.

In the embodiment of Figure 3, the system 10 includes a sampling station 86 located within the working area W of the manipulator 84. In this embodiment, the manipulator 84 is also configured to pick up products P from the row of products R and to deposit them in the sampling station 86 from where they are picked up, for example, to perform quality checks. Immediately after depositing a product P in the sampling station 86, the manipulator 84 picks up a product from the buffer 24 and deposits it in the empty space ES generated by the picking of the product P deposited in the sampling station 86, to prevent the picking of products P for quality checks from generating empty spaces ES in the row of products R.

Referring to Figure 4, in a possible embodiment, the system 10 may include a replenishment conveyor 88 configured to feed products P towards the working area W of the manipulator 84. The products P can be loaded onto the replenishment conveyor 88 manually or by means of a manipulator, for example after performing quality checks on the products P. The manipulator 84 can also be configured to selectively pick up products P from the buffer 24 or from the replenishment conveyor 88 to fill empty spaces ES in the row of products R.

If there are space constraints in providing a sampling station 86 and a replenishment conveyor 88 within the working area W of the manipulator 84, the replenishment conveyor 88 can extend over the sampling station 86 and can be mobile or telescopically retractable to clear access to the sampling station 86 when sampling is required.

The system 10 according to the present invention allows the use of products P coming from the buffer 24 both when the presence of empty spaces ES in the row of products R coming from the production line 50 is detected and when the production line 50 is stopped. In this way, the products coming from the buffer 24 can feed the boxing machine 12 both in the mode of replenishing the empty spaces ES as previously described, and when the production line 50 is stopped and the boxing machine 12 is fed solely by the products P coming from the buffer 24. This allows the boxing machine 12 to remain operational in case of temporary stops of the production line 50.

In possible embodiments, the feeding conveyor 20 can receive products P from more than one production line 50 and transfer them to the same boxing machine 12. The system 10 may include a conveying system positioned upstream of the feeding conveyor 20 configured to convey the products P from the production lines 50 to the feeding conveyor 20. The conveying system may include a selective conveying device configured to selectively connect one or more production lines 50 to the feeding conveyor 20 in order to convey to the feeding conveyor 20 the products P coming from one or more desired production lines 50.

In all embodiments, the products P coming from one or more production lines 50 can be of the same type or of different types, differing, by way of non-limiting example, in size, format, intended use, production batch, or any other characteristic useful to identify a type of products P.

The system 10 in accordance with the present invention allows for the optimization of the replenishment flow of products coming from the buffer 24, enabling an improvement in the overall performance of the production plant, measured for example with reference to the OEE (Overall Equipment Effectiveness), where the production plant is understood to be the set of production lines 50 and the boxing machine 12.

Compared to a system that feeds products coming from a buffer to a row of products R through a diverter, the system according to the present invention is able to feed individual products, which is generally not possible with a diverter. The system according to the present invention performs the deposition of products into the empty spaces of a continuous row much more precisely than is possible with a diverter and avoids the risk of jams.

The system according to the present invention, in operation, implements a method for boxing products P, comprising:
- providing a boxing machine 12 having an entry section 80,
- feeding to the entry section 80 of the boxing machine 12 a row of products R formed by products P aligned with each other in a transport direction A by means of a feeding conveyor 20,
- accumulating products P in a buffer 24,
- detecting on the feeding conveyor 20 the presence and position of empty spaces ES that interrupt the continuity of the row of products R by means of a detection device 22, and
- picking up products P from the buffer 24 by at least one manipulator 84 and depositing the products P on the feeding conveyor 20 in respective empty spaces ES based on information about the position of empty spaces ES provided by the detection device 22, in order to restore the continuity of the row of products R.

In possible embodiments, the method may include visually inspecting the moving row of products R on the feeding conveyor 20 to determine the presence and position of empty spaces ES in the row of products R.

In possible embodiments, the method may include detecting the presence and position of empty spaces ES in the row of products R by means of at least one load cell.

In possible embodiments, the method may include detecting the presence and position of empty spaces ES in the row of products R by means of at least one ultrasonic sensor.

In possible embodiments, the method may include detecting the presence and position of empty spaces ES in the row of products R by means of at least one laser sensor.

The method may include holding by the manipulator 84 a product P in a waiting position above the advancing row of products R along the feeding conveyor 20.

Of course, while the principle of the invention remains unchanged, the construction details and embodiments may be widely varied without departing from the scope of the invention as defined by the following claims.

## Claims

1. A system (10) for boxing products (P), comprising:
- a boxing machine (12) having an entry section (80),
- a feeding conveyor (20) configured to feed to the entry section (80) of the boxing machine (12) a row of products (R) formed by products (P) aligned with each other in a transport direction (A),
- a buffer (24) for accumulating products (P),
- a detection device (22) configured to detect on said feeding conveyor (20) the presence and position of empty spaces (ES) that interrupt the continuity of said row of products (R), and
- at least one manipulator (84) configured to pick up products (P) from said buffer (24) and to deposit said products (P) on said feeding conveyor (20) in respective empty spaces (ES) based on information about the position of empty spaces (ES) provided by said detection device (22), in order to restore the continuity of said row of products (R).

2. A system according to claim 1, wherein said at least one manipulator (84) is further configured to pick up products (P) from said row of products (R) and to deposit them in a sampling station (86), and to fill empty spaces (ES) formed by the picking of said products (P) deposited in the sampling station with products (P) picked up from said buffer (24).

3. A system according to claim 1, comprising a replenishment conveyor (88) configured to feed products (P) towards a working area (W) of said at least one manipulator (84), and wherein said at least one manipulator (84) is further configured to selectively pick up products (P) from said buffer (24) or from said replenishment conveyor (88) to fill empty spaces (ES) in said row of products (R).

4. A system according to any of the preceding claims, wherein said detection device (22) is an optical detection device including at least one camera (90) configured to visually inspect the moving row of products (R) on said feeding conveyor (20).

5. A system according to claim 4, wherein at least one camera (90) is located on board of said at least one manipulator (84).

6. A system according to any of the preceding claims, wherein said detection device (22) comprises at least one load cell configured to detect the presence and position of empty spaces on said feeding conveyor (20).

7. A method for boxing products (P), comprising:
- providing a boxing machine (12) having an entry section (80),
- feeding to the entry section (80) of the boxing machine (12) a row of products (R) formed by products (P) aligned with each other in a transport direction (A) by means of a main feeding conveyor (20),
- accumulating products (P) in a buffer (24),
- detecting on said feeding conveyor (20) the presence and position of empty spaces (ES) that interrupt the continuity of said row of products (R) by means of a detection device (22), and
- picking up products (P) from said buffer (24) by at least one manipulator (84) and depositing said products (P) on said feeding conveyor (20) in respective empty spaces (ES) based on information about the position of empty spaces (ES) provided by said detection device (22), in order to restore the continuity of said row of products (R).

8. A method according to claim 7, comprising visually inspecting the moving row of products (R) on said feeding conveyor (20) to determine the presence and position of empty spaces (ES) in said row of products (R).

9. A method according to claim 7, comprising detecting the presence and position of empty spaces (ES) in said row of products (R) by means of at least one load cell.

10. A method according to any of the claims 7-9, comprising holding by said manipulator (84) a product (P) in a waiting position above said row of products (R) advancing along said feeding conveyor (20).
